# EUROPÄISCHE PATENTSCHRIFT

(11) **EP 0 670 230 B1**
(45) Veröffentlichungstag und Bekanntmachung des Hinweises auf die Patenterteilung: **14.10.1998**
(21) Anmeldenummer: 95102204.5
(22) Anmeldetag: 17.02.1995
(51) Int. Cl.: B60G 17/015, B62D 5/07

(54) **Druckmittelversorgung für eine hydropneumatische, niveaugeregelte Achsfederung eines Arbeitsfahrzeuges**
Pressure fluid supply for a hydropneumatic load-levelling suspension of a utility vehicle
Alimentation en fluide sous pression pour une suspension hydropneumatique et à régulation de niveau d'un véhicule utilitaire

(30) Priorität: 03.03.1994 DE 9403577 U
(43) Veröffentlichungstag der Anmeldung: 06.09.1995
(73) Patentinhaber: Agco GmbH & Co., 87616 Marktoberdorf (DE)
(72) Erfinder: Ambros, Karl, D-87640 Altdorf (DE); Heinle, Hans, D-87640 Biessenhofen (DE); Girstenbrei, Erich, D-87640 Biessenhofen (DE); Leutner, Siegfried, D-87600 Kaufbeuren (DE)

(56) Entgegenhaltungen:
- EP-A- 0 354 438
- EP-A- 0 615 870
- WO-A-92/00203
- DE-A- 3 347 473
- DE-C- 4 041 210
- DE-U- 9 015 246
- FR-A- 2 393 706
- FR-A- 2 546 469

## Beschreibung

Die Erfindung betrifft eine Druckmittelversorgung für eine hydropneumatische, niveaugeregelte Achsfederung eines Arbeitsfahrzeuges mit einer von einer Load-Sensing-Pumpe gespeisten Hydraulikanlage, an die mindestens ein hydraulischer Verbraucher und mindestens ein Druckspeicher der hydropneumatischen Achsfederung angeschlossen sind, zu dessen Aufladung der Steuereingang der LS-Pumpe bei Vorhandensein eines eingeschalteten Verbrauchers über eine erste, den Lastdruck des Verbrauchers führende Steuerleitung und bei Fehlen eines eingeschalteten Verbrauchers über eine zweite, mit der Druckleitung der LS-Pumpe verbundene Steuerleitung druckbeaufschlagt ist, wobei die erste und die zweite Steuerleitung über ein Ventil mit dem Steuereingang verbunden sind.

Eine Druckmittelversorgung dieser Art ist in der EP-A-615870 (Stand der Technik nach Art. 54(3) EPÜ) beschrieben, wobei allerdings eine Konstantpumpe zum Einsatz gelangt. Jedem der Zylinderräume des Stellkolbens der hydropneumatischen Federung ist hier ein Druckspeicher zugeordnet. Der unterhalb des Kolbens befindliche Zylinderraum wird, sofern dies möglich ist, immer dann aufgeladen, wenn die normalerweise im Neutralumlauf laufende Konstantpumpe in der die hydropneumatische Federung una weitere Verbraucher beliefernden Druckleitung Druck aufbaut. Hierzu ist mindestens einer der weiteren Verbraucher einzuschalten. Da die Zeltspanne zwischen zwei Betätigungen eines der weiteren Verbraucher u. U. groß werden kann, ist die Möglichkeit vorgesehen, den dem oberen Zylinderraum zugeordneten Druckspeicher über ein Niveauregelventil mit dem Druckspeicher des unteren Zylinderraumes entnommener Druckmittel aufzuladen. Es hat sich aber inzwischen gezeigt, daß im Arbeitseinsatz des Fahrzeuges Situationen eintreten können, in denen das für einen zwingenden Niveauausgleich des Fahrzeugaufbaus benötigte Druckmittel in keinem der Druckspeicher vorhanden ist. Für diesen Fall ist vorgesehen, die Pumpe der Hydraulikanlage über einen Druckschalter auf Förderung zu schalten. Die dazu getroffene Maßnahme ist zwar nicht im einzelnen erläutert, sie besteht jedoch in der Anordnung eines komplizierten und teuren Speicherladeventils in die Druckleitung.

Hinzu kommt, daß u.a. wegen unterschiedlicher Anforderungen diverse Fahrzeug-Baureihen mit unterschiedlichen Pumpenbauarten ausgerüstet werden sollen. Während bei der oben beschriebenen Druckmittelversorgung noch eine Konstantpumpe eingesetzt ist, sollen andere Baureihen mit einer druck- und volumengeregelten Load-Sensing-Pumpe, kurz LS-Pumpe, ausgerüstet werden. Der Übergang von der einen auf die andere Pumpenbauart legt aber wegen deren andersartiger Steuerung der Fördermenge die Verwendung von Ventilen für die Niveauregelung nahe, die für die Zusammenarbeit mit LS-Pumpen geeignet sind. Derartige Ventile besitzen jedoch nicht nur eine erhebliche Baugröße, die eine Unterbringung in unmittelbarer Nähe der Stellzylinder praktisch unmöglich macht, sondern sind kompliziert aufgebaut und deshalb erheblich teurer als herkömmliche Ventile.

In der DE 33 47 473 A1 ist eine Druckmittelversorgung nach dem Oberbegriff des Anspruchs 1, mit einer LS-Pumpe als Druckmittelquelle für einen Verbraucher und einen Druckspeicher beschrieben. Bei Druckmittelbedarf durch den Verbraucher und/oder den Druckspeicher ist der Steuereingang der LS-Pumpe entweder über eine erste Steuerleitung mit dem Lastdruck des eingeschalteten Verbrauchers oder, sofern der Verbraucher nicht eingeschaltet ist und der Speicherdruck einen vorgegebenen Minimalwert unterschreitet, über eine zweite Steuerleitung mit dem Druck der LS-Pumpe beaufschlagt, um den Pumpendruck entsprechend der jeweiligen Anforderung zu steigern. Die Druckbeaufschlagung des Steuereinganges erfolgt dabei über ein Wechselventil, an das die beiden Steuerleitungen angeschlossen sind. Die Regelung des Speicherdrucks auf einen Wert innerhalb eines vorgegebenen Druckbereiches erfolgt durch ein aus einem Vorsteuerventil, einem Umschaltventil und einer Druckwaage bestehenden Schaltventil. Insbesondere das Vorsteuerventil ist dabei entsprechend dem zu überwachenden Druck im Speicher auszulegen. Ein derart aufgebaute Schaltventil erfordert jedoch einen hohen Herstellungsaufwand und macht seine Realisierung unter Verwendung von billigen Serienventilen unmöglich. Außerdem kann mit einem solchen Vorsteuerventil nur ein konstanter Druckbereich geregelt werden.

Die Aufgabe der Erfindung besteht darin, eine auf Verwendung einer LS-Pumpe basierende Druckmittelversorgung für eine hydropneumatische, niveaugeregelte Achsfederung eines Arbeitsfahrzeuges zu schaffen, bei der für die Niveauregelung des Fahrzeugaufbaus einfach aufgebaute, in herkömmlicher Weise elektromagnetisch betätigte Serienventile genutzt werden können und die Druckspeicher variabel aufladbar sind.

Diese Aufgabe wird dadurch gelöst, daß zur Verbindung der ersten mit der zweiten Steuerleitung ein von einem Steuergerät elektrisch umschaltbares 3/2-Wegeventil vorhanden ist, das je nach Schaltstellung die Druckleitung oder die Steuerleitung, die den Lastdruck mindestens eines der übrigen hydraulischen Verbraucher führt, mit dem Steuereingang der Load-Sensing-Pumpe verbindet.

Unabhängig von der Belastung des Fahrzeuges kann dadurch dessen Aufbau durch entsprechende Aufladung des Druckspeichers immer in gleicher Höhenlage gehalten werden.

Um die Pumpen zu schonen, den Energiebedarf für die Niveauregelung so gering wie möglich zu halten sowie das hydraulische Potential der hydropneumatischen Federung voll zu nützen, kann die Einleitung und die Beendigung eines Ladevorganges der Druckspeicher in Abhängigkeit von der Zeit und/oder der Fahrgeschwindigkeit des Fahrzeuges und/oder weiteren Betriebsparametern gesteuert werden.

Ein Ausführungsbeispiel der Erfindung wird im folgenden an Hand einer Zeichnung näher beschrieben.

In dem Ausführungsbeispiel ist ein Stellzylinder der hydropneumatischen Federung eines Fahrzeuges allgemein mit 1 bezeichnet. Sein Gehäuse 2 stützt sich am abzufedernden Fahrzeugaufbau 3 ab, während die Kolbenstange 4 des im Gehäuse 2 verschiebbaren Kolbens 5 an der mit 6 angedeuteten Fahrzeugachse angreift. Der oberhalb des Kolbens 5 befindliche Zylinderraum 2a ist über die Leitung 7 an einen Niveauregelventilblock 8 und dieser über eine Leitung 9 an die Druckleitung 10 einer Load-Sensing-Pumpe 11, im folgenden kurz LS-Pumpe genannt, angeschlossen. Die Druckleitung 10 führt zu einer Ventilplatte 13, über die weitere Druckflüssigkeitsverbraucher V1, V2, V3 wie z.B. Hubzylinder für Kraftheber, Frontlader und/oder Lenkung mit Druckmittel belieferbar sind.

Der Niveauregelventilblock 8 enthält zwei elektrisch ansteuerbare 2/2-Ventile 14, 15, von denen das Ventil 14 die Druckmittelzufuhr zum Zylinderraum 2a und zu einem damit in Verbindung stehenden ersten Druckspeicher 16 beeinflusst, wogegen mit dem Ventil 15 die Abfuhr des Druckmittels über die Leitung 17 zum Druckmittelbehälter 18 steuerbar ist. Die Steuerung der Ventile 14, 15 erfolgt auf elektrischem Wege über Steuerleitungen 19, 20 mittels eines für andere Funktionen im Fahrzeug bereits vorhandenen Steuergerätes 21, das außerdem über elektrische Leitungen 22, 23 mit einem die relative Einfederung des Fahrzeugaufbaus 3 gegenüber der Fahrzeugachse 6 ermittelnden Niveauschalter 24 verbunden ist.

Vor dem Steuerventil 14 zweigt von der Druckleitung 9 eine Leitung 25 ab, die zum Zylinderringraum 2b führt und mit einem zweiten Druckspeicher 26 in Verbindung steht. Beide Behälter 16, 26 werden über ein in der Druckleitung 9 angeordnetes Rückschlagventil 27 mit Druckmittel beaufschlagt.

Die LS-Pumpe 11 der Druckmittelversorgung besitzt einen Steuereingang 11a, der über eine Steuerleitung 28 und ein Wechselventil 29 mit dem Lastdruck eines betätigten Verbrauchers V1 - V3 beaufschlagt ist. Ist keiner der Verbraucher betätigt, bleibt der Steuereingang 11a unbelastet und die LS-Pumpe 11 auf Nullfördermenge gestellt, wobei in der Druckleitung 10 ein verhältnismäßig geringer Druck aufgebaut wird. Durch Betätigung mindestens eines der Verbraucher V1 - V3 wird der Steuereingang 11a druckbeaufschlagt und die LS-Pumpe 11 derart eingestellt, daß der Druck in der Druckleitung 10 ständig um einen festen, bauartbedingten Betrag, z. B. 20 bar, höher ist als der gemeldete Lastdruck. In der Leitung 28 befindet sich ein vom Steuergerät 21 umschaltbares 3/2-Wegeventil 30, das normalerweise auf freien Durchgang geschaltet ist. Dieses Ventil kann sehr klein dimensioniert werden, da der Volumenstrom zum Steuereingang 11a minimal ist.

Funktionsweise der Druckmittelversorgung:

Es wird davon ausgegangen, daß sich der Fahrzeugaufbau zunächst entsprechend der jeweiligen Achslast in der gewünschten Höhe befindet, und das Steuergerät 21 die Ventile 14, 15 geschlossen hält. Der Druckspeicher 16 sei von vorausgegangenen Niveauregelungsvorgängen her teilweise entladen. Da kein hydraulischer Verbraucher V1 - V3 betätigt ist, arbeitet die LS-Pumpe 11 im Stand-by-Betrieb, d. h. mit geringem Druck und Nullförderung. In dieser Situation wird der Gegendruck im Zylinderringraum 2b durch das geschlossene Rückschlagventil 27 aufrechterhalten.

Erfährt die Fahrzeugachse 6 durch Betätigung eines der Verbraucher V1, V2, eine Lasterhöhung, beispielsweise durch Aufnahme eines Arbeitsgerätes mit Hilfe einer fahrzeugeigenen Hubvorrichtung, so wird wegen der Beaufschlagung des Steuereingangs 11a mit dem Lastdruck die LS-Pumpe 11 veranlasst, Druck im Hydraulikkreis aufzubauen. Unter der aufgenommenen Last sinkt der Fahrzeugaufbau 3 ab und verringert den Abstand zur Fahrzeugachse 6. Die Größe der Annäherung wird vom Niveauschalter 24 an das Steuergerät 21 gemeldet, welches das Ventil 14 öffnet. Gleichzeitig wird das Ventil 30 umgeschaltet, um die Druckleitung 10 mit dem Steuereingang 11a zu verbinden, mit der Folge, daß systembedingt die LS-Pumpe 11 auf ein hohes Druckniveau hochläuft. Das von der LS-Pumpe 11 gelieferte Druckmittel füllt nun die Druckspeicher 16, 26 auf. Das Ventil 14 und das Ventil 30 bleiben solange geöffnet, bis der Niveauschalter 24 dem Steuergerät 21 meldet, daß der Fahrzeugaufbau 3 sein ursprüngliches Niveau wieder erreicht hat bzw. eine programmierte Zeitfunktion oder eine andere betriebsbedingte Parameterfunktion eine Beendigung des Ladevorganges bewirkt.

Nach dem Abbau eines Arbeitsgerätes nimmt der Fahrzeugaufbau 3 wegen der Entlastung der Fahrzeugachse 6 ein erhöhtes Niveau ein. Um den Fahrzeugaufbau 3 wieder auf die gewünschte Höhenlage abzusenken, veranlasst das Steuergerät 21 aufgrund der Meldung des Niveauschalters 24 die Öffnung des Ventils 15, bis genügend Druckflüssigkeit aus dem Zylinderraum 2a in den Druckmittelbehälter 18 zurückgeströmt ist. Ein nicht gezeigtes, dem Ventil 15 nachgeordnetes Drosselelement bewirkt einen langsamen Absenkvorgang und einen Schutz gegenüber unzulässiger Druckentlastung des Druckspeichers 16. Gleichzeitig mit dem Ventil 15 wird das Ventil 30 geschaltet und bewirkt, wie oben beschrieben, eine Aufladung des Druckspeichers 26 auf hohes Niveau.

Wird später durch die Aufnahme einer Last die Nachlieferung von Druckmittel zum Druckspeicher 16 bzw. 26 erforderlich, schaltet das Steuergerät 21 das Ventil 14 in die Durchgangsstellung und gleichzeitig das Ventil 30 in die Kurzschlussstellung zwischen Druckleitung 10 und Steuereingang 11a. Dadurch wird an Stelle des nicht vorhandenen Lastdruckes der nicht betätigten Verbraucher V1 - V3 der höhere Stand-by-Druck in der Druckleitung 10 auf den Steuereingang 11a der LS-Pumpe 11 geschaltet und dieser auf diese Weise das Einschalten eines der Verbraucher V1 - V3 vorgetäuscht. Da die LS-Pumpe 11 bauartbedingt versucht, den Druck in der Druckleitung 10 immer um einen bestimmten Betrag höher zu halten als den Druck am Steuereingang 11a, erfolgt ein schnelles Hochfahren der LS-Pumpe 11 bis auf den Abregeldruck. Die Pumpe fördert dabei die Menge, die für den Ladevorgang erforderlich ist und schwenkt dann auf Nullfördermenge zurück. Sämtliche Druckspeicher 16, 26 werden während dieses Vorganges sehr schnell aufgeladen, so daß bereits nach einigen Sekunden Druckmittelzufuhr der Fahrzeugaufbau 3 seine gewünschte Höhenlage einnimmt und das Steuergerät 21 in Abhängigkeit von den Signalen des Niveauschalters 24 und/oder weiterer durch das Steuergerät 21 verarbeiteter Betriebsparameter, z. B. der Einschaltdauer und der Fahrgeschwindigkeit, die Ventile 14 und 30 wieder umschaltet.

Das Fahrzeug kann jetzt normal betrieben werden. Sollte es in gewissen Betriebseinsätzen vorteilhaft sein, mit ausgeschalteter Federung zu arbeiten, kann durch Öffnen des Ventils 15 und geeigneter Überkopplung der Signale des Niveauschalters 24 im Steuergerät 21 der Fahrzeugaufbau 3 vollständig abgesenkt und mittels des Druckes im Zylinderraum 2b hydraulisch blockiert werden. Hierbei wird der Zylinderraum 2a über das Ventil 15 zum Druckmittelbehälter 18 entlastet. Der im Druckspeicher 26 und im Zylinderraum 2b anstehende Druck bewirkt, daß die Fahrzeugachse 6 hydraulisch gegen einen Anschlag am Fahrzeugaufbau 3 gedrückt wird.

Um die LS-Pumpe 11 vor allzu lang andauerndem Betrieb mit Höchstbelastung zu bewahren, wenn das Normalniveau des Fahrzeugaufbaus 3 in best. Einsatzfällen nicht wiederhergestellt werden kann, sieht das Steuergerät 21 vor, den durch Ansteuerung des Ventils 30 verursachten Druckaufbau zur Nachladung des Druckspeichers 26 in Abhängigkeit von best. Kriterien zu steuern. So kann als Kriterium z.B. bei Frontladearbeiten die Zeit und/oder die jeweilige Fahrgeschwindigkeit herangezogen werden, wobei die Funktion der Federung unterhalb eines vorgegebenen Geschwindigkeits-Grenzwertes ausgeschaltet werden kann.

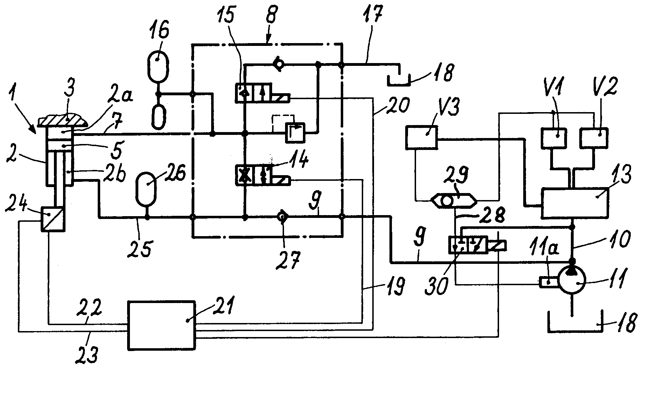

## Patentansprüche

1. Druckmittelversorgung für eine hydropneumatische, niveaugeregelte Achsfederung eines Arbeitsfahrzeuges mit einer von einer Load-Sensing-Pumpe (11) gespeisten Hydraulikanlage, an die mindestens ein hydraulischer Verbraucher (V1-V3) und mindestens ein Druckspeicher (16; 26) der hydropneumatischen Achsfederung angeschlossen sind, wobei zur Aufladung des Druckspeichers der Steuereingang (11a) der Load-Sensing-Pumpe (11) bei Vorhandensein eines eingeschalteten Verbrauchers über eine erste, den Lastdruck des Verbrauchers führende Steuerleitung und bei Fehlen eines eingeschalteten Verbrauchers über eine zweite, mit der Druckleitung (10) der Load-Sensing-Pumpe verbundene Steuerleitung druckbeaufschlagt ist, wobei die erste und die zweite Steuerleitung über ein Ventil mit dem Steuereingang (11a) verbunden sind,
**dadurch gekennzeichnet**,
daß zur Verbindung der ersten mit der zweiten Steuerleitung ein von einem Steuergerät (21) elektrisch umschaltbares 3/2-Wegeventil (30) vorhanden ist, das je nach Schaltstellung die Druckleitung (10) oder die Steuerleitung (28), die den Lastdruck mindestens eines der übrigen hydraulischen Verbraucher (V1 - V3) führt, mit dem Steuereingang (11a) der Load-Sensing-Pumpe (11) verbindet.

2. Druckmittelversorgung nach Anspruch 1,
**dadurch gekennzeichnet**,
daß die Dauer eines Ladevorganges der Druckspeicher (16, 26) begrenzt ist.

3. Druckmittelversorgung nach Anspruch 2,
**dadurch gekennzeichnet**,
daß die Dauer eines Ladevorganges in Abhängigkeit von der Zeit und/oder Fahrgeschwindigkeit des Fahrzeuges und/oder weiteren Betriebsparametern gesteuert ist.

## Claims

1. Pressure fluid supply for a hydropneumatic, level-regulated axle suspension of a utility vehicle having a hydraulic unit which is supplied by a load-sensing pump (11) and to which at least one hydraulic consumer (V1-V3) and at least one pressure reservoir (16; 26) of the hydropneumatic axle suspension are connected, the control input (11a) of the load-sensing pump (11) being pressurised via a first control line guiding the load pressure of the consumer when an active consumer is present and being pressurized via a second control line connected to the pressure line (10) of the load-sensing pump when an active consumer is not present in order to charge the pressure reservoir, the first and the second control lines being connected to the control input. (11a) via a valve,
characterised in that,
in order to connect the first control line to the second control line, a 3/2 way valve (30), which can be switched over electrically by a control device (21), is present and, depending on the switching position, connects the pressure line (10) or the control line (28), which guides the load pressure of at least one of the remaining hydraulic consumers (V1-V3), to the control input (11a) of the load-sensing pump (11).

2. Pressure fluid supply according to claim 1, characterised in that the duration of a charging procedure for the pressure reservoirs (16, 26) is limited.

3. Pressure fluid supply according to claim 2, characterised in that the duration of a charging procedure is controlled as a function of the time and/or travel speed of the vehicle and/or other operating parameters.

## Revendications

1. Alimentation en fluide sous pression pour une suspension hydropneumatique et à régulation de niveau, d'un véhicule utilitaire dans laquelle :
- à une installation hydraulique alimentée par une pompe load-sensing (11) sont raccordés au moins, un système hydraulique utilisateur (V1-V3) et au moins un accumulateur de pression (16 ; 26) de la suspension hydropneumatique des essieux,
- pour charger l'accumulateur de pression, l'entrée de commande (11a) de la pompe (11) est soumise à l'action d'une pression d'une part en présence d'un système utilisateur en service, par l'intermédiaire d'une première canalisation de commande transmettant la pression de charge de l'utilisateur, d'autre part en l'absence d'un système utilisateur en service, par l'intermédiaire d'une seconde canalisation de commande reliée à la canalisation de pression (10) de la pompe (11), les deux canalisations de commande étant reliées à l'entrée de commande à travers une soupape,
caractérisée en ce que
pour relier la première et la deuxième canalisation de commande, il est prévu une soupape 3/2 voies que commande électriquement un appareil de commande (21) et qui, selon sa position de commutation, met en liaison avec l'entrée de commande (11a) de la pompe load-sensing (11) la canalisation de pression (10) ou la canalisation de commande (28) qui amène la pression de charge d'au moins un des autres systèmes hydrauliques utilisateurs (V1-V3).

2. Alimentation en fluide sous pression selon la revendication 1,
caractérisée en ce que
la durée de l'opération de chargement de l'accumulateur de pression (16, 26) est limitée.

3. Alimentation en fluide sous pression selon la revendication 2,
caractérisée en se que
la durée de l'opération de chargement est commandée en fonction du temps et/ou de la vitesse de déplacement du véhicule et/ou d'autres paramètres de fonctionnement.
